# FASCICULE DE BREVET EUROPEEN

(11) **EP 3 313 762 B1**
(45) Date de publication et mention de la délivrance du brevet: **10.06.2020**
(21) Numéro de dépôt: 16741100.8
(22) Date de dépôt: 24.06.2016
(51) Int. Cl.: B65H 75/36, G02B 6/44, H02G 1/08

(54) **DISPOSITIF CONDITIONNEUR PERMETTANT LE DÉVIDAGE ET LE POUSSAGE D'UN BRIN DANS UN FOURREAU POUR L'INSTALLATION D'UN CÂBLE**
VERPACKUNGSVORRICHTUNG ZUR ERMÖGLICHUNG DES AUFROLLENS UND SCHIEBENS EINES STRANGS IN EINE HÜLLE ZUR INSTALLATION EINES KABELS
PACKING DEVICE ALLOWING THE REELING AND PUSHING OF A STRAND INTO A SHEATH IN ORDER TO INSTALL A CABLE

(30) Priorité: 25.06.2015 FR 1555881
(43) Date de publication de la demande: 02.05.2018
(73) Titulaire: Orange, 75015 Paris (FR)
(72) Inventeur: CAMPION, Jean-Luc, 22700 Saint Quay Perros (FR); LECOQ, Daniel, 22140 Berhet (FR)
(86) Numéro de dépôt international: PCT/FR2016/051555
(87) Numéro de publication internationale: WO 2016/207565

(56) Documents cités:
- US-A- 2 689 709
- US-A- 2 788 952

## Description

### 1. Domaine de l'invention

La demande d'invention se situe dans le domaine du câblage électrique ou optique, et plus particulièrement dans le domaine de l'insertion d'un câble dans un fourreau.

### 2. Etat de la technique antérieure

Dans des locaux, domestiques ou d'entreprise, les câbles de branchement pour l'électricité, la télévision, le téléphone, ou l'Internet, qu'ils soient pour des branchements électriques ou optiques, sont en général dissimulés dans des fourreaux à l'intérieur des cloisons.

Un fourreau est parfois pré-équipé, soit d'un câble préinstallé, soit d'un fil appelé brin ou aiguille, destiné à être retiré depuis une extrémité du fourreau, un câble étant attaché au brin à l'autre extrémité et étant inséré dans le fourreau par traction du brin hors du fourreau.

Lorsque le fourreau n'est pas pré-aiguillé c'est-à-dire pré-équipé d'un brin, une technique classique pour y insérer un câble est d'y introduire d'abord un brin.

Il existe des dévidoirs permettant le stockage et l'insertion d'un brin dans un fourreau, mais ils sont coûteux, lourds, et compliqués d'utilisation. Les publications de brevet US 2 788 952 A et US 2 689 709 A divulguent des exemples de tels dévidoirs.

En effet, ces dispositifs du commerce sont conçus pour insérer le brin le plus loin possible, ce qui impose un renforcement du brin et des autres composantes du dispositif. Le brin est souvent plus solide que nécessaire, et le dispositif ne convient pas pour des fourreaux de taille modeste dont les coudes peuvent être trop abrupts pour la grosseur et la rigidité du brin.

Les dimensions de ces dispositifs imposent un renforcement des parties mécaniques qui sont mobiles entre elles, telles qu'une coque et une bobine positionnée rotative dans la coque, bobine dans laquelle est enroulé le brin. Le poids de ces dispositifs est en relation avec leurs dimensions, et ils sont donc lourds à manipuler.

De plus leur utilisation est compliquée et peu ergonomique. Le brin enroulé dans une bobine doit être tiré hors du dévidoir sur une certaine longueur en tirant sur le brin, qui doit être empoigné à main nue, ou avec une poignée spéciale conçue pour agripper le brin, afin d'être poussé vers l'intérieur du fourreau. La longueur de brin libre et encore non introduite, se trouvant entre la main qui pousse et la bouche du fourreau, risque de "flamber", c'est-à-dire qu'elle risque de plier sans entrer dans le fourreau, d'autant plus que la résistance augmente en fonction de la longueur de brin déjà insérée. Malgré leur solidité de nombreux cas de rupture du brin sont d'ailleurs constatés. Le pas d'insertion doit donc être le plus court possible, ce qui rend l'insertion plus longue et plus pénible car le brin est inséré par de nombreuses opérations de poussage répétées sur une petite longueur. Pendant ce temps, le dispositif doit être tenu de l'autre main, ou doit être posé si les deux mains sont nécessaires pour éviter le flambement, ce qui n'est pas toujours pratique ou même possible. Les deux mains de l'installateur manipulant le dispositif étant occupées, une deuxième personne peut même être nécessaire pour maintenir le fourreau s'il n'est pas solidement arrimé à une cloison ou à une prise murale.

Un des buts de l'invention est de remédier à ces inconvénients de l'état de la technique.

### 3. Exposé de l'invention

L'invention vient améliorer la situation à l'aide d'un dévidoir pour le stockage et le dévidage d'un brin, comprenant :
- une roulette comprenant une cavité annulaire de même axe que la roulette,
- une coque recouvrant partiellement un secteur de la roulette, la roulette étant positionnée rotative autour de son axe dans la coque,
- un brin élastique en flexion et initialement rectiligne, dont une partie est enroulée dans la cavité, et une autre partie est émergée du dévidoir par un trou dans la coque, une rotation de la roulette entraînant un passage du brin au travers du trou,
- un tube élastique en flexion et initialement rectiligne, dit tube d'amorce, de longueur inférieure à celle du brin, coulissant librement dans le trou sur sa longueur, le brin coulissant librement dans le tube d'amorce, la partie du tube d'amorce à l'intérieur du dévidoir étant le cas échéant enroulée dans la roulette avec le brin,
- les dimensions du dévidoir étant telles qu'elles permettent d'assurer une préhension de la coque à l'aide d'une main et un contrôle de la rotation de la roulette à l'aide d'un doigt de la même main.

Grâce à la taille réduite de la roulette, la coque qui l'entoure partiellement peut être tenue d'une seule main, et comme la coque ne couvre qu'un secteur de la roulette, cette même main peut également toucher la roulette et en contrôler la rotation à l'aide d'un ou plusieurs doigts, et ainsi actionner la sortie ou l'entrée du brin du ou dans le dévidoir. De plus, la coque ne recouvrant pas entièrement la roulette, son poids est réduit. Le maniement du dévidoir est donc facilité et laisse même une main libre à l'installateur.

Le tube d'amorce assure une continuité entre le dévidoir et la bouche du fourreau dans le cas il n'est pas possible de placer le trou du dévidoir directement contre elle, et évite ainsi les flambements entre le trou du dévidoir et la bouche du fourreau. En effet, la bouche du fourreau peut être difficile d'accès si par exemple elle est en retrait par rapport à une prise ou à une ouverture dans une cloison, ou derrière un tableau électrique.

Egalement grâce à cet aspect, il est possible d'amorcer l'insertion du brin dans un fourreau offrant une résistance. En effet, la rigidité du tube d'amorce s'ajoutant à celle du brin, il est possible de vaincre plus facilement que le seul brin cette résistance en début de fourreau. Une fois le tube inséré sur une longueur suffisante pour dépasser le point de résistance initiale du fourreau, le brin prend le relais du tube d'amorce au-delà de ce point dans le fourreau.

Selon un aspect de l'invention, le brin possède une raideur suffisante pour générer une force d'éjection de la partie enroulée du brin hors du dévidoir par le trou de la coque.

Grâce à cet aspect, les spires du brin enroulées dans la roulette agissent comme un ressort cherchant à reprendre sa forme initiale rectiligne. Le seul moyen pour le brin de reprendre sa forme rectiligne est de sortir par le trou de la coque. Ainsi, il n'est pas nécessaire de tirer le brin hors du dévidoir en le tenant par sa partie émergée. Au contraire, il suffit de contrôler sa sortie en contrôlant la rotation de la roulette à l'aide de la main qui tient la coque.

Selon un aspect de l'invention, une friction de surface du brin génère une force de rétention de la partie enroulée du brin dans le dévidoir, sensiblement égale à la force d'éjection.

Grâce à cet aspect, sans action de la part de l'utilisateur, la partie enroulée du brin reste stationnaire dans la roulette, mais très peu de force est nécessaire pour la faire sortir du dévidoir. Il suffit en effet d'une légère poussée sur la roulette, par exemple à l'aide d'un doigt de la main tenant la coque, pour vaincre la force de rétention, la force de poussée du doigt s'ajoutant à la force d'éjection du brin. De même, très peu de force du doigt est nécessaire pour bloquer la rotation de la roulette lorsque la force d'éjection est légèrement supérieure à la force de rétention, qui peut varier en fonction de la vitesse de rotation.

Selon un aspect de l'invention, la coque comprend en outre un moyen débrayable de blocage du tube d'amorce.

Grâce à cet aspect, lorsqu'un fourreau offre une résistance à l'insertion du tube d'amorce, en bloquant contre la coque le tube d'amorce sur un point quelconque de sa longueur il est possible de pousser la partie du tube émergeant du dévidoir, et non encore insérée dans le fourreau, vers l'intérieur du fourreau simplement en tenant la coque d'une main, et sans qu'il soit nécessaire d'empêcher manuellement la rotation "à reculons" de la roulette. Ainsi, malgré cette résistance, le tube d'amorce ne risque pas retourner à nouveau dans le dévidoir.

Egalement grâce à cet aspect, il est possible, en bloquant la rotation de la roulette avec un doigt de la main tenant la coque, de pousser à la fois le tube d'amorce et la portion du brin engagée au-delà du tube d'amorce, afin de franchir un point de résistance du fourreau.

Selon un aspect de l'invention, le tube d'amorce comprend une première butée l'empêchant de sortir complètement par le trou de la coque, et une deuxième butée l'empêchant de rentrer complètement dans la roulette.

Grâce à cet aspect, le tube d'amorce ne se dégage pas accidentellement de la coque, que ce soit vers l'extérieur, ou vers l'intérieur de la roulette.

Selon un aspect de l'invention, la cavité annulaire de la roulette est une gouttière ouverte vers l'axe de la roulette, un des deux bords de la gouttière étant circulaire et ininterrompu, le trou dans la coque étant positionné du même côté que le bord ininterrompu de la gouttière, et à une distance de l'axe inférieure ou égale à celle dudit bord.

La force d'éjection du brin enroulé dans la roulette a pour effet de le plaquer contre le fond de la gouttière périphérique à la roulette. La cavité annulaire de la roulette n'a pas besoin d'être fermée et la gouttière suffit pour contenir le brin enroulé, avec éventuellement une partie du tube d'amorce, le reste de la roulette peut donc être évidée, ce qui contribue à l'allégement du dévidoir. Pour sortir du dévidoir, le brin, et éventuellement le tube contenant le brin, doit s'échapper par le bord libre, puis s'engager dans le trou dont la position évite une torsion au brin, et éventuellement au tube, car le trou est du même côté de la coque que le bord libre, à un endroit de la coque qui n'est pas obstrué par la gouttière.

Selon un aspect de l'invention, un embout de guidage prolonge l'extrémité émergée du brin, l'embout étant flexible et de forme arrondie à son extrémité.

Grâce à cet aspect, le brin est précédé dans le fourreau par un guide évitant les blocages pouvant être causés par des aspérités internes au fourreau. L'embout, de préférence de quelques centimètres, peut être détachable.

Selon un aspect de l'invention, la surface extérieure de la roulette est antidérapante.

Grâce à cet aspect, le doigt ou la main s'agrippe bien à la partie de la roulette laissée découverte par la coque, et ne glisse pas lors du contrôle de sa rotation.

Selon un aspect de l'invention, la coque comprend un moyen de fixation à un vêtement.

Grâce à cet aspect, le dévidoir peut être accroché à un vêtement de l'installateur, tel que sa ceinture, lui libérant ainsi les deux mains, par exemple en cas résistance dans le fourreau nécessitant une manipulation plus fine du tube d'amorce ou du brin.

Selon un aspect de l'invention, le diamètre de la roulette est inférieur ou égal à 20 cm et la raideur du brin est supérieure ou égale à 0,003 N*m².

Grâce à cet aspect, le dévidoir est adapté pour conditionner un brin de raideur et de taille nécessaire à une installation par poussage dans un fourreau de diamètre intérieur inférieur ou égal à 20 mm, libre ou occupé. L'effet ressort de la force d'éjection du brin enroulé génère une poussée dans une limite permettant un travail en sécurité pour l'installateur.

De plus, le diamètre de la roulette permet pendant le travail la tenue de la coque et le blocage de la roulette d'une seule main. La taille réduite facilite aussi le rangement et le transport du dévidoir.

Selon un aspect de l'invention, la longueur du brin est comprise entre 10 m et 50 m. Ainsi, la plupart des installations de câblage, pré-connectorisé ou non, peuvent être faites à l'aide du dévidoir selon l'invention, que ce soit du câblage électrique, optiques, coaxial, etc.

Selon un aspect de l'invention, le brin comprend de la fibre de verre, du carbone, et/ou de l'acier.

Ces matériaux offre pour un faible diamètre une raideur élevée, une bonne élasticité et un faible coefficient de frottement.

Selon un aspect de l'invention, le brin est un câble optique.

Grâce à cet aspect, une fois inséré dans le fourreau sur toute sa longueur, le brin peut être détaché du dévidoir et laissé dans le fourreau, ce qui évite une opération d'insertion d'un câble optique par traction du brin hors du fourreau, et de rembobinage du brin dans le dévidoir.

Selon un aspect de l'invention, la section du brin est de préférence circulaire pour ne pas privilégier de plan de flexion particulier, mais elle peut être d'une autre forme par exemple rectangulaire ou ovale.

Selon un aspect de l'invention, la coque et la roulette sont en matière plastique.

Grâce à cet aspect, le dévidoir est léger et peu coûteux à fabriquer. La matière plastique peut être par exemple du PVC (polychlorure de vinyle), de l'ABS (acrylonitrile butadiène styrène), ou du PP (polypropylène).

Selon un aspect de l'invention, la coque et la roulette sont en métal. Ainsi, le dévidoir résiste au choc et à l'écrasement. Le métal peut être par exemple de l'aluminium, ou tout métal ou alliage léger.

Certains aspects du dévidoir qui viennent d'être décrits peuvent être mis en œuvre indépendamment les uns des autres ou en combinaison les uns avec les autres.

L'invention concerne aussi un procédé d'insertion d'un brin dans un fourreau utilisant un dévidoir tel que celui qui vient d'être décrit, comprenant les étapes suivantes:
- positionnement du dévidoir avec mise en contact de la coque contre la bouche du fourreau de façon à engager l'extrémité émergée du brin dans le fourreau, la roulette étant bloquée de la main tenant la coque,
- déblocage de la roulette et sortie du brin hors du dévidoir,
- contrôle de l'entrée du brin à l'intérieur du fourreau, à l'aide d'un doigt appliqué sur la roulette.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la **figure 1** présente une vue du dévidoir selon un aspect de l'invention;
- la **figure 2** présente une vue éclatée du dévidoir sans le brin, selon un aspect de l'invention;
- la **figure 3** présente un exemple d'utilisation du dévidoir en illustrant une position possible de la main de l'installateur.

### 5. Description détaillée d'au moins un mode de réalisation de l'invention

Dans la suite de la description, on présente des exemples de plusieurs modes de réalisation de l'invention selon différents aspects.

Le dévidoir selon un aspect de l'invention est maintenant décrit en relation avec

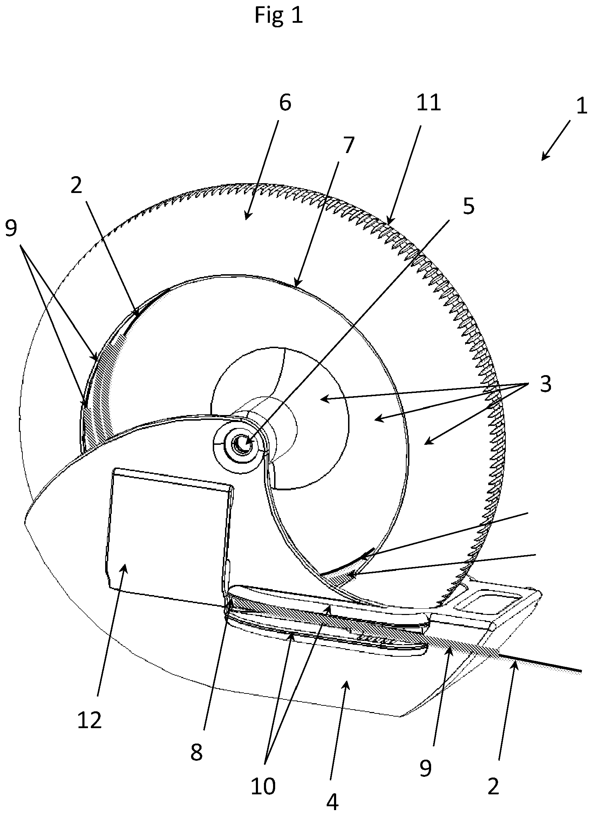

### les figures 1, 2 et 3.

La figure 1 montre le dévidoir 1 dans son entier, c'est-à-dire une coque 4, une roulette 3 et un le brin 2.

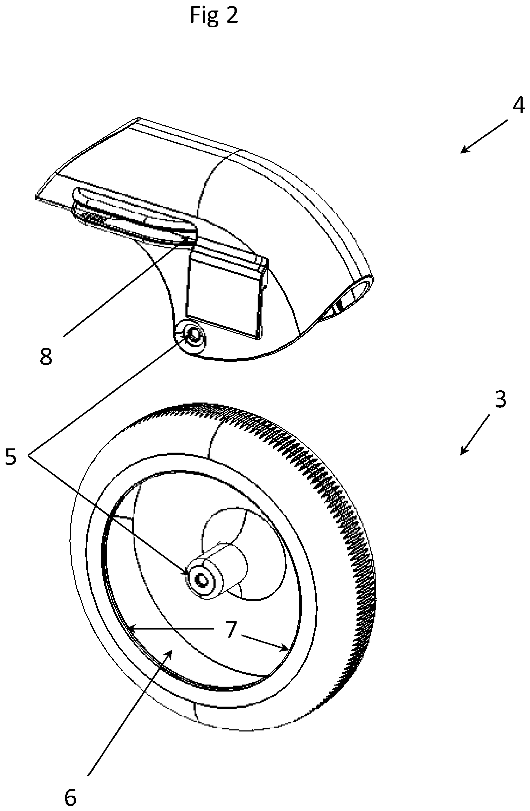

Pour plus de clarté la figure 2 montre le dévidoir 1 éclaté mais sans le brin 2, la roulette 3 étant séparée de la coque 4.

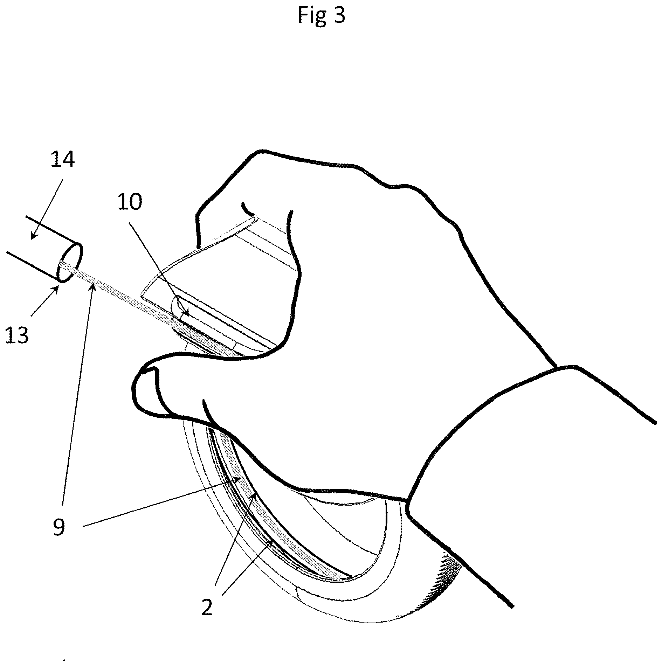

Afin d'illustrer le procédé d'insertion selon l'invention, la figure 3 présente un exemple d'utilisation du dévidoir 1 avec la main de l'installateur.

Les références sont identiques dans les trois figures.

Le dévidoir 1 comprend un brin 2 enroulé dans la cavité 6 en forme d'anneau d'une roulette 3. La roulette 3 est positionnée rotative dans la coque 4, grâce à un axe 5 de rotation central et perpendiculaire au périmètre de la cavité annulaire 6. La coque 4 ne recouvre pas entièrement la roulette 3 mais seulement un secteur, et y est reliée par l'axe 5 de rotation. Alternativement, la coque 4 peut être reliée à la roulette 3 uniquement par le secteur en question, la partie annulaire 6 de la roulette 3 glissant dans la coque 4, ce qui évite de matérialiser l'axe 5 de rotation au centre de la roulette 3.

Une partie de la roulette 3 est donc accessible tout en étant positionnée dans la coque 4, ce qui permet par exemple de faire tourner la roulette 3 dans la coque 4, en touchant la roulette3 du doigt ou de la main.

Dans un mode de réalisation avantageux, la cavité annulaire 6 de la roulette 3 prend la forme d'une gouttière, la gouttière 6 étant ouverte vers l'intérieur, c'est-à-dire vers l'axe 5 de la roulette 3, à la manière d'un garde-boue de bicyclette. Cette gouttière 6 est reliée solidairement à l'axe 5 par un seul de ses deux bords, ce qui permet de laisser l'autre bord 7 libre, c'est-à-dire totalement ouvert sur tout son pourtour, et de préférence parfaitement circulaire et lisse. Ainsi, le brin 2 enroulé dans la gouttière 6 peut passer par-dessus le bord libre 7 et s'échapper de la roulette 3 quand elle est en rotation par rapport à la coque 4.

Les dimensions du dévidoir 1 sont telles qu'un installateur peut le manipuler d'une seule main, c'est-à-dire le tenir par la coque 4 fermement, tout en contrôlant la rotation de la roulette 3 à l'aide d'un ou plusieurs doigts de cette main.

Les formes non remplies de la coque 4 et de la roulette 3 engendrent une économie de matière qui allège l'ensemble. En effet, la coque 4 ne recouvre pas entièrement la roulette 3, et la roulette 3 est complètement ouverte d'un côté, contrairement à la technique antérieure où le brin est enfermé dans une cartouche comportant une fente circulaire pour permettre au brin d'émerger du dévidoir.

On comprend que la forme combinée aux dimensions contribue à alléger le dévidoir 1 et à en faciliter la manipulation, donc à en améliorer l'ergonomie.

Une particularité du brin 2 est qu'il est rigide et initialement rectiligne, mais pas trop rigide afin que son élasticité permette de l'enrouler sur lui-même dans la gouttière 6 de la roulette 3. Une extrémité du brin 2 émerge du dévidoir 1 en passant par-dessus le bord libre 7 de la gouttière 6 et par un trou 8 aménagé au travers de la coque 4. Ce trou 8 est positionné dans la coque 4 à une distance de l'axe 5 qui est égale ou inférieure à la distance entre le bord 7 de la gouttière 6 et l'axe 5, afin d'éviter une torsion du brin 2 en lui imposant une courbure contraire à celle qu'il prend dans la roulette 3.

Une autre particularité du brin 2 est que sa raideur combinée à son élasticité tend à lui faire reprendre sa forme rectiligne, ce qui génère une force d'éjection du brin 2 hors de la roulette 3 par le trou 8 de la coque 4.

Encore une particularité du brin 2 est que la friction entre la surface du brin enroulé et la surface interne de la gouttière 6 empêche le brin de glisser. Il suffit donc de bloquer la rotation de la roulette 3 pour empêcher la sortie du brin 2 hors du trou 8. Il est donc facile pour l'installateur d'empêcher le brin 2 de se dérouler tout seul, en appliquant sur la roulette 3 un des doigts de sa main tenant la coque 4.

La force d'éjection est contrebalancée par la friction existant entre la surface du brin 2 et le trou 8 dans la coque 4, et par la friction engendrée par la rotation de la roulette 3 dans la coque 4. L'effort du doigt retenant la roulette 3 est donc limité.

Si la friction est insuffisante pour empêcher le brin 2 de sortir lorsque le dévidoir 1 est au repos, c'est-à-dire non maintenu par la main de l'installateur, le dévidoir 1 peut comporter un moyen débrayable de maintien du brin dans la roulette, agissant sur la roulette comme par exemple un cran d'arrêt fixé à la coque 4, ou agissant sur le trou 8 comme par exemple un bouchon.

Dans un mode de réalisation avantageux, le dévidoir comprend également un tube d'amorce 9 coulissant librement dans le trou 8 de la coque 4, le brin 2 coulissant lui-même librement dans le tube d'amorce 9. Le tube d'amorce 9 peut être bloqué à n'importe quel point sur sa longueur à l'aide d'une pince 10 fixée sur la surface externe de la coque 4 à proximité du trou 8, constituée par exemple par deux ergots crantés entre lesquels le tube 9 peut être coincé par simple pression. Lorsqu'il n'est pas bloqué par la pince 10, le tube 9 est empêché de sortir complètement du dévidoir 1, ou d'y rentrer complètement, à l'aide d'une butée à chaque extrémité du tube 9. Cette butée peut être simplement un léger élargissement local du diamètre du tube 9. Le tube 9 est de préférence de section circulaire, de diamètre légèrement supérieur à celui du brin 2, de façon à ce qu'à la fois la friction et tout flambement du brin 2 à l'intérieur du tube 9 soit minimisés.

Grâce à ce tube d'amorce 9 qui vient se positionner entre le trou 8 du dévidoir 1 et la bouche 13 du fourreau 14, le flambement du brin 2 entre ces deux points est évité. Le tube 9 est donc une extension du dévidoir 1, dont on peut faire varier la longueur en fonction de la distance séparant la bouche 13 du dévidoir 1, ce qui est particulièrement utile lorsque la bouche 13 du fourreau 14 n'est pas directement accessible, en raison de contraintes telles que par exemple la présence d'une prise murale entre la bouche 13 du fourreau 14 et l'extérieur de la cloison, ou un fourreau 14 non solidement arrimé à la prise ou à la cloison dans ses derniers centimètres.

On comprend que grâce au tube d'amorce 9, il est possible de mettre le dévidoir 1 en contact direct et ferme avec la bouche 13 du fourreau 14, quel que soit le degré d'accessibilité de la bouche du fourreau, et quelle que soit la fermeté de sa position. Il est rappelé que c'est ce contact direct et ferme qui permet l'insertion du brin 2 dans le fourreau 14 simplement en activant la rotation de la roulette 3 à l'aide d'un doigt de la main tenant la coque 4.

Un autre avantage du tube d'amorce 9 est que lorsqu'il est enroulé dans la roulette 3, un effet cabestan se crée entre le brin 2 qu'il contient et sa surface interne. Cet effet cabestan est utile pour empêcher le brin 2 de sortir tout seul lorsque le dévidoir 1 est au repos, c'est-à-dire non maintenu par la main de l'installateur et donc avec la roulette 3 non bloquée.

D'autres caractéristiques avantageuses peuvent se combiner à celles qui viennent d'être décrites.

La surface externe de la roulette 3 peut être antidérapante afin de plus facilement contrôler sa rotation du doigt ou de la main. Ceci peut être réalisé par exemple par un crantage 11 ajouté ou moulé dans la matière de la roulette 3, ou par un enduit avec des propriétés adhésives recouvrant la roulette 3.

La coque 4 peut comprendre un crochet 12 permettant d'attacher temporairement le dévidoir 1 à un support tel qu'un vêtement de l'installateur, par exemple sa ceinture, de telle sorte qu'il peut momentanément libérer ses deux mains, par exemple si le fourreau 14 offre une résistance à l'insertion particulièrement forte nécessitant la manipulation directe du tube 9 ou du brin 2 avec ses deux mains.

On voit sur les figures que le trou 8 et la pince 10 sont disposés du côté gauche de la coque 4, ce qui est commode pour un installateur droitier car il peut ainsi utiliser son pouce droit pour faire pression à la fois sur la roulette 3 et sur le tube d'amorce 9 (ou sur le brin 2 en l'absence d'un tube d'amorce). Pour un installateur gaucher, il est possible de disposer le trou 8 et la pince 10 du côté droit de la coque 4, et de retourner la roupette 3 sur son axe 5, afin que le bord libre 7 de la gouttière 6 soit du même côté que le trou 8. Dans un mode de réalisation particulièrement avantageux, la coque 4 dispose de chaque côté d'un trou 8 et d'une pince 10, et c'est à l'installateur de monter la roulette 3 avec le bord 7 de la gouttière 6 du côté qu'il préfère, droit ou gauche. De même, un crochet 12 peut être disposé de chaque côté, afin de satisfaire à la fois les installateurs droitiers et gauchers.

Pour détacher la roulette 3 de son axe 5, il suffit, après avoir retiré un rivet axial le cas échéant, d'écarter les deux côtés de la coque 4 et de retirer la roulette 3 de l'axe 5. Pour monter la roulette 3 avec l'orientation souhaitée, l'opération inverse suffit.

La dimension de la roulette 3 est de préférence définie à partir de la raideur du brin 2 à conditionner, le brin étant sélectionné en fonction des contraintes d'installation. Cette raideur est typiquement supérieure ou égal à 0,003 N*m² et proportionnelle au diamètre de la roulette de façon à obtenir l'effet ressort escompté.

Le diamètre du brin est faible, typiquement inférieur ou égal à 3 mm, afin de pouvoir être conditionné dans une roulette de moins de 200 mm de diamètre.

A titre d'exemple, un brin de 1,5 mm de diamètre composé de résine et de fibres de verre présentant un module de Young de 60 GPa peut être conditionné dans une roulette de 100 mm de diamètre, la raideur de ce brin étant d'environ 0,01 N*m².

Le module de Young (module d'élasticité) du ou des matériaux assemblés pour obtenir cette raideur lors de la construction du brin doit rester élevé et de préférence supérieur à 30 GPa.

Un brin de cette dimension peut par exemple être inséré dans un fourreau de 11 mm de diamètre, occupé par un câble coaxial de 7 mm de diamètre.

Le brin peut également être un câble optique de type poussable avec une raideur similaire.

Le dévidoir 1 selon l'invention est d'utilisation aisée. Il suffit de positionner le dévidoir 1 en mettant en contact la coque 4 contre la bouche 13 du fourreau 14, le plus proche possible du trou 8 afin d'empêcher tout flambement de la partie émergée du brin 2.

L'extrémité émergée du brin 2 doit être engagée dans le fourreau 14, la roulette 3 étant bloquée de la main tenant la coque 4.

Si le dévidoir 1 est doté d'un tube d'amorce 9, le tube d'amorce doit également être engagé dans le fourreau 14. Avec un tube d'amorce, le dévidoir 1 n'a pas besoin d'être en contact avec la bouche 13 du fourreau 14, car c'est le tube 9 qui empêche le flambement du brin 2, en assurant une continuité physique entre le dévidoir 1 et le fourreau 14.

La roulette 3 peut ensuite être débloquée, ce qui déclenche la sortie du brin 2 hors du dévidoir 1, et du tube d'amorce 9 avec, le cas échéant.

La vitesse d'entrée du brin 2, et du tube 9 le cas échéant, est contrôlée en appliquant sur la roulette 3 un doigt de la main tenant la coque 4.

En cas de résistance rencontrée dans le fourreau 14, la force d'entrée du brin 2 (et du tube 9 le cas échéant) dans le fourreau 14 peut être augmentée en aidant la rotation de la roulette 3 avec le même doigt, dans le bon sens, sans avoir besoin d'écarter le dévidoir 1 de sa position contre la bouche 13 du fourreau 14.

En cas d'une résistance plus forte rencontrée dans le fourreau 14, le brin 2 (et le tube 9 le cas échéant), peut être poussé avec encore plus de force, en écartant le dévidoir 1 de sa position, avec la roulette 3 débloquée, puis en ramenant le dévidoir 1 dans sa position, avec la roulette 3 bloquée.

## Revendications

1. **Dévidoir** pour le stockage et le dévidage d'un brin, comprenant :
• une roulette (3) comprenant une cavité annulaire (6) de même axe (5) que la roulette,
• une coque (4) recouvrant partiellement un secteur de la roulette (3), la roulette étant positionnée rotative autour de son axe (5) dans la coque,
• un brin (2) élastique en flexion et initialement rectiligne, dont une partie est enroulée dans la cavité annulaire (6), et une autre partie est émergée du dévidoir par un trou (8) dans la coque (4), une rotation de la roulette (3) entraînant un passage du brin (2) au travers du trou (8),
le dévidoir étant **caractérisé en ce qu'**il comprend en outre :
• un tube (9) élastique en flexion et initialement rectiligne, dit tube d'amorce, de longueur inférieure à celle du brin (2), coulissant librement dans le trou (8) sur sa longueur, le brin (2) coulissant librement dans le tube d'amorce (9), la partie du tube d'amorce à l'intérieur du dévidoir (1) étant le cas échéant enroulée dans la roulette (3) avec le brin (2),
et **en ce que** les dimensions du dévidoir (1) sont telles qu'elles permettent d'assurer une préhension de la coque (4) à l'aide d'une main et un contrôle de la rotation de la roulette (3) à l'aide d'un doigt de la même main.

2. **Dévidoir selon la revendication** 1, où le brin (2) possède une raideur suffisante pour générer une force d'éjection de la partie enroulée du brin hors du dévidoir (1) par le trou (8) de la coque (4).

3. **Dévidoir selon la revendication** 2, où une friction de surface du brin (2) génère une force de rétention de la partie enroulée du brin dans le dévidoir (1), sensiblement égale à la force d'éjection.

4. **Dévidoir selon l'une des revendications précédentes,** où la coque (4) comprend en outre un moyen (10) débrayable de blocage du tube d'amorce (9).

5. **Dévidoir selon l'une des revendications précédentes,** où le tube d'amorce (9) comprend une première butée l'empêchant de sortir complètement par le trou (8) de la coque (4), et une deuxième butée l'empêchant de rentrer complètement dans la roulette (3).

6. **Dévidoir selon l'une des revendications précédentes,** où la cavité annulaire (6) de la roulette (3) est une gouttière ouverte vers l'axe (5) de la roulette, un des deux bords de la gouttière étant circulaire et ininterrompu (7), le trou (8) dans la coque (4) étant positionné du même côté que le bord (7) ininterrompu de la gouttière (6), et à une distance de l'axe (5) inférieure ou égale à celle dudit bord (7).

7. **Dévidoir selon l'une des revendications précédentes,** où un embout de guidage prolonge l'extrémité émergée du brin (2), l'embout étant flexible et de forme arrondie à son extrémité.

8. **Dévidoir selon l'une des revendications précédentes,** où la surface extérieure (11) de la roulette est antidérapante.

9. **Dévidoir selon l'une des revendications précédentes,** où la coque comprend un moyen (12) de fixation à un vêtement.

10. **Dévidoir selon l'une des revendications précédentes,** où le diamètre de la roulette (3) est inférieur ou égal à 20 cm et la raideur du brin (2) est supérieure ou égale à 0,003 N*m².

11. **Dévidoir selon l'une des revendications précédentes,** où le brin (2) comprend de la fibre de verre, du carbone, et/ou de l'acier.

12. **Dévidoir selon l'une des revendications précédentes,** où le brin (2) est un câble optique.

13. **Dévidoir selon l'une des revendications précédentes,** où la coque (4) et la roulette (3) sont en matière plastique.

14. **Procédé d'insertion** d'un brin (2) dans un fourreau (14) utilisant un dévidoir (1) conforme à la revendication 1, comprenant les étapes suivantes:
• positionnement du dévidoir (1) avec mise en contact du tube d'amorce (9) contre la bouche (13) du fourreau (14) de façon à engager l'extrémité émergée du brin (2) dans le fourreau avec le tube d'amorce (9), la roulette (3) étant bloquée de la main tenant la coque (4),
• déblocage de la roulette (3) et sortie du brin (2) hors du dévidoir (1) avec le tube d'amorce (9),
• contrôle de l'entrée du brin (2) et du tube d'amorce (9) à l'intérieur du fourreau (14), à l'aide d'un doigt appliqué sur la roulette (3).

## Patentansprüche

1. **Abrollvorrichtung** für das Lagern und Abrollen eines Strangs, die Folgendes beinhaltet:
• eine Rolle (3), die einen ringförmigen Hohlraum (6) mit derselben Achse (5) wie die Rolle beinhaltet,
• eine Schale (4), die einen Bereich der Rolle (3) teilweise abdeckt, wobei die Rolle um ihre Achse (5) drehbar in der Schale positioniert ist,
• einen biegeelastischen und ursprünglich geradlinigen Strang (2), von dem ein Teil in dem ringförmigen Hohlraum (6) aufgewickelt ist und ein anderer Teil durch ein Loch (8) in der Schale (4) aus der Abrollvorrichtung hervorragt, wobei ein Drehen der Rolle (3) bewirkt, dass der Strang (2) durch das Loch (8) hindurchgeht,
wobei die Abrollvorrichtung **dadurch gekennzeichnet ist, dass** sie ferner Folgendes beinhaltet:
• ein biegeelastisches und ursprünglich geradliniges Rohr (9), das als Startrohr bezeichnet wird, dessen Länge kleiner als die des Strangs (2) ist und das über seine Länge frei in dem Loch (8) gleitet, wobei der Strang (2) frei in dem Startrohr (9) gleitet, wobei der Teil des Startrohrs im Inneren der Abrollvorrichtung (1) gegebenenfalls mit dem Strang (2) in der Rolle (3) aufgewickelt ist,
und dadurch, dass die Maße der Abrollvorrichtung (1) derart sind, dass sie ein Greifen der Schale (4) mit Hilfe einer Hand und eine Steuerung des Drehens der Rolle (3) mit Hilfe eines Fingers derselben Hand ermöglichen.

2. **Abrollvorrichtung nach Anspruch 1,** wobei der Strang (2) eine ausreichende Steifigkeit besitzt, um eine Kraft zum Ausstoßen des aufgewickelten Teils des Strangs durch das Loch (8) der Schale (4) aus der Abrollvorrichtung (1) heraus zu erzeugen.

3. **Abrollvorrichtung nach Anspruch 2,** wobei eine Oberflächenreibung des Strangs (2) eine Haltekraft des aufgewickelten Teils des Strangs in der Abrollvorrichtung (1) erzeugt, die im Wesentlichen gleich der Ausstoßkraft ist.

4. **Abrollvorrichtung nach einem der vorhergehenden Ansprüche,** wobei die Schale (4) ferner ein entkoppelbares Mittel (10) zum Sperren des Startrohrs (9) beinhaltet.

5. **Abrollvorrichtung nach einem der vorhergehenden Ansprüche,** wobei das Startrohr (9) einen ersten Anschlag, der verhindert, dass es vollständig durch das Loch (8) der Schale (4) austritt, und einen zweiten Anschlag, der verhindert, dass es vollständig in die Rolle (3) eintritt, beinhaltet.

6. **Abrollvorrichtung nach einem der vorhergehenden Ansprüche,** wobei der ringförmige Hohlraum (6) der Rolle (3) eine zu der Achse (5) der Rolle hin offene Rinne ist, wobei einer der zwei Ränder der Rinne kreisförmig und durchgängig (7) ist, wobei das Loch (8) in der Schale (4) auf derselben Seite wie der durchgängige Rand (7) der Rinne (6) und in einem Abstand zu der Achse (5), der kleiner als oder gleich dem des Rands (7) ist, positioniert ist.

7. **Abrollvorrichtung nach einem der vorhergehenden Ansprüche,** wobei ein Führungsansatz das hervorragende Ende des Strangs (2) verlängert, wobei der Ansatz biegsam ist und an seinem Ende eine abgerundete Form aufweist.

8. **Abrollvorrichtung nach einem der vorhergehenden Ansprüche,** wobei die äußere Oberfläche (11) der Rolle rutschfest ist.

9. **Abrollvorrichtung nach einem der vorhergehenden Ansprüche,** wobei die Schale ein Mittel (12) zum Befestigen an einem Kleidungsstück beinhaltet.

10. **Abrollvorrichtung nach einem der vorhergehenden Ansprüche,** wobei der Durchmesser der Rolle (3) kleiner als oder gleich 20 cm ist und die Steifigkeit des Strangs (2) größer als oder gleich 0,003 N*m² ist.

11. **Abrollvorrichtung nach einem der vorhergehenden Ansprüche,** wobei der Strang (2) Glasfaser, Kohlenstoff und/oder Stahl beinhaltet.

12. **Abrollvorrichtung nach einem der vorhergehenden Ansprüche,** wobei der Strang (2) ein optisches Kabel ist.

13. **Abrollvorrichtung nach einem der vorhergehenden Ansprüche,** wobei die Schale (4) und die Rolle (3) aus Kunststoff sind.

14. **Verfahren zum Einführen** eines Strangs (2) in eine Hülle (14) unter Verwendung einer Abrollvorrichtung (1) nach Anspruch 1, das die folgenden Schritte beinhaltet:
• Positionieren der Abrollvorrichtung (1), sodass das Startrohr (9) mit der Mündung (13) der Hülle (14) in Kontakt kommt, um das hervorragende Ende des Strangs (2) zusammen mit dem Startrohr (9) in die Hülle einzubringen, wobei die Rolle (3) durch die Hand, die die Schale (4) hält, gesperrt wird,
• Entsperren der Rolle (3) und Austreten des Strangs (2) aus der Abrollvorrichtung (1) zusammen mit dem Startrohr (9),
• Steuern des Eintretens des Strangs (2) und des Startrohrs (9) in das Innere der Hülle (14) mit Hilfe eines Fingers, der auf die Rolle (3) einwirkt.

## Claims

1. **Reel** for storing and paying out a strand, comprising:
• a wheel (3) comprising an annular cavity (6) having the same axis (5) as the wheel,
• a shell (4) partially covering a sector of the wheel (3), the wheel being positioned so as to be able to rotate about its axis (5) in the shell,
• a strand (2) which is able to bend elastically and is initially straight, of which one part is coiled in the annular cavity (6) and another part is poked out of the reel via a hole (8) in the shell (4), rotation of the wheel (3) causing the strand (2) to pass through the hole (8),
the reel being **characterized in that** it further comprises:
• a tube (9) which is able to bend elastically and is initially straight, referred to as the starting tube, the length of which is less than that of the strand (2), sliding freely in the hole (8) over its length, the strand (2) sliding freely within the starting tube (9), wherein that part of the starting tube that is inside the reel (1) may be coiled in the wheel (3) with the strand (2),
and **in that** the dimensions of the reel (1) are such that the shell (4) can be gripped with one hand and the rotation of the wheel (3) can be controlled using a finger of the same hand.

2. **Reel according to Claim 1,** where the strand (2) is sufficiently stiff to generate a force ejecting the coiled part of the strand from the reel (1) via the hole (8) in the shell (4).

3. **Reel according to Claim 2,** where surface friction of the strand (2) generates a force, essentially equal to the ejection force, retaining the coiled part of the strand in the reel (1).

4. **Reel according to one of the preceding claims,** where the shell (4) further comprises a means (10), which can be disengaged, for immobilizing the starting tube (9).

5. **Reel according to one of the preceding claims,** where the starting tube (9) comprises a first stop that prevents it from entirely exiting via the hole (8) of the shell (4), and a second stop preventing it from entering entirely inside the wheel (3).

6. **Reel according to one of the preceding claims,** where the annular cavity (6) of the wheel (3) is a gutter that is open towards the axis (5) of the wheel, one of the two edges of the gutter being circular and continuous (7), the hole (8) in the shell (4) being positioned on the same side as the continuous edge (7) of the gutter (6), and at a distance from the axis (5) that is less than or equal to that of said edge (7).

7. **Reel according to one of the preceding claims,** where a guiding tip extends the poked-out end of the strand (2), the tip being flexible and rounded at its end.

8. **Reel according to one of the preceding claims,** where the outer surface (11) of the wheel is non-slip.

9. **Reel according to one of the preceding claims,** where the shell comprises a means (12) for attaching to clothing.

10. **Reel according to one of the preceding claims,** where the diameter of the wheel (3) is less than or equal to 20 cm and the stiffness of the strand (2) is greater than or equal to 0.003 N*m².

11. **Reel according to one of the preceding claims,** where the strand (2) comprises glass fibre, carbon and/or steel.

12. **Reel according to one of the preceding claims,** where the strand (2) is an optical cable.

13. **Reel according to one of the preceding claims,** where the shell (4) and the wheel (3) are made of plastic material.

14. **Method for inserting** a strand (2) into a sheath (14) using a reel (1) according to Claim 1, comprising the following steps:
• positioning the reel (1) with the starting tube (9) placed in contact against the mouth (13) of the sheath (14) so as to engage the poked-out end of the strand (2) into the sheath with the starting tube (9), the wheel (3) being immobilized by the hand holding the shell (4),
• releasing the wheel (3) and allowing the strand (2) to leave the reel (1) with the starting tube (9),
• controlling the entry of the strand (2) and of the starting tube (9) into the sheath (14) using a finger pressed onto the wheel (3).
